# EUROPÄISCHE PATENTSCHRIFT

(11) **EP 1 236 690 B1**
(45) Veröffentlichungstag und Bekanntmachung des Hinweises auf die Patenterteilung: **08.09.2004**
(21) Anmeldenummer: 02003610.9
(22) Anmeldetag: 16.02.2002
(51) Int. Cl.: C02F 11/12, F26B 17/20

(54) **Vorrichtung zum Mischen und Trocknen von Schlickstoffen**
Device for mixing and drying sludges
Dispositif pour mélanger et sécher des boues

(30) Priorität: 01.03.2001 DE 10109771
(43) Veröffentlichungstag der Anmeldung: 04.09.2002
(73) Patentinhaber: Schaufler, Thomas, 73235 Weilheim (DE)
(72) Erfinder: Kühne, Thomas, 72581 Dettingen/Erms (DE)
(74) Vertreter: Riedel, Peter

(56) Entgegenhaltungen:
- EP-A- 0 031 894
- DE-A- 3 735 655
- DE-A- 4 117 630
- DE-A- 19 636 795
- US-A- 6 035 546
- PATENT ABSTRACTS OF JAPAN vol. 2000, no. 12, 3. Januar 2001 (2001-01-03) & JP 2000 246295 A (KOMINYUUTAA SERVICE KK), 12. September 2000 (2000-09-12)

## Beschreibung

Die Erfindung betrifft eine Vorrichtung zum Trocknen von Schlickstoffen der im Oberbegriff des Anspruchs 1 angegebenen Gattung.

Aus der DE 196 36 795 A1 ist eine Vorrichtung und ein Verfahren zum Mischen und Trocknen von Schlickstoffen durch Vermengung der Schlickstoffe mit Adsorptionsmitteln bekannt. Einem Mischer, bestehend aus vorzugsweise zwei gegensinnig rotierenden Mischwalzen, deren Mischleisten ineinandergreifen, wird Schlickstoff und Adsorptionsmittel zugegeben. Das Adsorptionsmittel ist beispielsweise aus faser- oder körnerförmigem Zellstoff gebildet. In einem ersten Gehäuseabschnitt des Mischers erfolgt die Vermischung der beiden Stoffe und Bildung von granulatähnlichen Partikeln, die in einem zweiten Gehäuseabschnitt, in dem eine Förderschnecke umläuft, aus dem Mischer ausgetragen werden.

Der vorliegenden Erfindung liegt die Aufgabe zugrunde, eine Vorrichtung zum Mischen und Trocknen von Schlickstoffen zu schaffen, die zu einer verbesserten Produktqualität des Granulats führt.

Diese Aufgabe wird mit einer Vorrichtung mit den Merkmalen des Patentanspruchs 1 gelöst.

Die erfindungsgemäße Vorrichtung ermöglicht es, sehr rasch eine Verteilung von Adsorptionsmittel im Schlickstoff zu erreichen, indem beide Stoffe in einem ersten Gehäuseabschnitt eines Gehäuses der Vorrichtung durch gegensinnig rotierende Mischwalzen erfaßt und gemischt werden. Die Mischwalzen werden über einen Antrieb und ein deren Wellen verbindendes Stirnradgetriebe in drehzahlsynchrone, gegensinnige Rotation versetzt. Die Mischwalzen sind aus sternförmigen Trägern gebildet, die in diskreten Abständen über die Länge der Mischwalzen an deren Wellen befestigt sind. Auf die sternförmigen Träger sind Schlagleisten angebracht. Das Mischgut wird mit Hilfe der rotierenden Mischwalzen, deren Schlagleisten ineinandergreifen, zu rieselfähigen isolierten Granulaten mit einer Korngröße von etwa 0,1 mm bis 8 mm geformt. Damit bei der Rotation der Mischwalzen auf das Mischgut eine Kraftkomponente in Längsrichtung des ersten Gehäuseabschnittes wirkt, sind die Schlagleisten bezogen auf die Rotationsachsen der Mischwalzen wendelförmig auf den sternförmigen Trägern angeordnet.

Bei der Bewegung des Mischgutes entlang der Mischwalzen werden die insbesondere faserigen Zuschlagstoffe in die sich bildenden Granulatkörner sternförmig radial vom Mittelpunkt der Granulate ausgerichtet. Die Fasern binden zum einen die festen Stoffe und transportieren die verbleibenden, niedrigviskosen Flüssigkeiten, wie Wasser, im Mischgut über Kapillarkräfte an die Oberfläche der Granulate. In einem zweiten Gehäuseabschnitt der Vorrichtung befindet sich zum Zwecke des Austrags der Granulate aus der Vorrichtung ein Förderorgan. Zur kontinuierlichen, störungsfreien Zufuhr der Granulate vom ersten Gehäuseabschnitt, dem Mischer, in das Förderorgan ist erfindungsgemäß vorgesehen, einen Teil der Schlagleisten nicht über die gesamte Länge der Mischwalzen, sondern diese über eine Teillänge, vorzugsweise etwa 2/3 der Gesamtlänge der Mischwalzen, zu führen. Die betreffenden Schlagleisten sind auf der dem Förderorgan zugewandten Seite der Mischwalzen gekürzt. Das Förderorgan ist erfindungsgemäß aus zwei gegensinnig rotierenden Förderschnecken gebildet. In Drehrichtung der Mischwalzen betrachtet, befinden sich die verkürzten Schlagleisten vor der Austragsposition der Schneckenwendel der Förderschnecken. Durch diese konstruktive Maßnahme ist bewirkt, daß eine verbesserte Mitnahme der Granulate aus dem ersten Gehäuseabschnitt in die Förderschnecken bewirkt ist und ein Stopfen bzw. ein Agglomerieren von Granulaten beim Übergang vom ersten in den zweiten Gehäuseabschnitt sicher vermieden ist.

Zum drehzahlsynchronen gegensinnigen Antrieb der Mischwalzen und Förderschnecken ist vorgesehen, jeweils eine Förderschnecke mit einem verlängerten Abschnitt der Welle einer Mischwalze drehfest zu verbinden. Bei einer vorzugsweise aus zwei Mischwalzen und zwei Förderschnecken gebildeten Vorrichtung zum Mischen und Trocknen ist es zweckmäßig, die Wellenenden der beiden Förderschnecken mit Hilfe eines Stirnradgetriebes, welches in einem Ölbad umläuft, zu verbinden. Damit die Scherwirkung durch die Schlagleisten in dem Mischgut möglichst groß ist und eine Verdichtung des Mischgutes in Folge mechanischen Drucks sicher vermieden ist, sind die Schlagleisten als Stäbe mit rechteckigem oder rautenförmigem Querschnitt gebildet. Es ist zweckmäßig, die Schlagleisten in Drehrichtung der Mischwalze betrachtet mit einem positiven Anstellwinkel relativ zur Tangente ihres Umlaufkreises zu versehen, um das Mischgut vom Gehäuse radial in Richtung auf die Wellen der Mischwalzen zu bewegen. Um Toträume, in denen keine Vermischung des eingefüllten Schlickstoffes und Adsorptionsmittels stattfindet, zu vermeiden, weist das Gehäuse in seinem Bodenbereich zwei sich entlang der Mischwalzen und Förderschnecken erstreckende Bögen mit konstantem Abstand zur Mantelfläche der Mischwalzen und Förderschnecken auf. Der Abstand zwischen den Bögen und den betreffenden Mantelflächen sollte dabei möglichst gering sein. Jeder der Bögen erstreckt sich über mindestens 90° bezogen auf die Rotationsachse der Mischwalzen bzw. Förderschnecken, vorzugsweise jedoch über einen Kreisbogen von 135°.

Damit die Eingabe von Zuschlagstoffen wie Adsorptionsmitteln über die Länge des ersten Gehäuseabschnitts verteilt und damit eine sehr rasche Durchmischung des Mischgutes erfolgen kann, ist es von Vorteil, daß zwei oder ggf. mehrere Einfüllöffnungen an der Oberseite des ersten Gehäuseabschnittes angeordnet sind. Es kann zweckmäßig sein, auch auf der Oberseite des zweiten Gehäuseabschnittes Einfüllöffnungen beispielsweise für Panierungsstoffe oder dgl. vorzusehen. Der Austrag des fertig gemischten, rieselfähigen Granulates erfolgt über zumindest eine Austragsöffnung an der Unterseite des zweiten Gehäuseabschnittes. Zur Beschleunigung oder Verzögerung der Gutpassage in der Vorrichtung ist vorgesehen, das Gehäuse der Vorrichtung um einen Winkel, vorzugsweise von ± 40° um eine orthogonal zur Längsrichtung des Gehäuses verlaufenden Horizontalachse schwenkbar zu gestalten. Bei einem positiven Schwenkwinkel, d. h. bei einem aufwärts gerichteten Gutstrom im Mischer und in dem Förderorgan ist eine Vergrößerung der Festigkeit der Granulate bewirkt. Oberhalb der Mischwalzen und der Förderschnecken ist in dem Gehäuse ein Entspannungsraum vorgesehen, um ein Verdichten des als Granulat auszubildenden und vorliegenden Mischgutes zu vermeiden.

Zu Wartungs- und Reinigungszwecken ist es zweckmäßig, zumindest den Boden des ersten Gehäuseabschnittes lösbar am Gehäuse anzuordnen. Es kann gleichwohl zweckmäßig sein, den Boden des zweiten Gehäuseabschnittes lösbar am Gehäuse festzulegen.

Als weitere konstruktive Maßnahme zur Beeinflussung der Guteigenschaften des in der Vorrichtung gebildeten Granulates ist vorgesehen, als Antrieb einen Elektromotor mit einem stufenlos einstellbaren Getriebe anzuwenden. Der Elektromotor wirkt unter Zwischenschaltung einer Sicherheitskupplung, welche bei einem eventuellen Stopfen der Vorrichtung ausrückt, auf eine Welle einer Mischwalze. Die Vorrichtung kann zur Produktion von einzelnen Chargen oder im Dauerbetrieb eingesetzt werden.

Ein Ausführungsbeispiel der Vorrichtung zum Trocknen von Schlickstoffen ist nachstehend anhand der Zeichnung näher erläutert. In der Zeichnung zeigt:
- Fig. 1: eine Seitenansicht der Vorrichtung,
- Fig. 2: eine Draufsicht auf die Vorrichtung mit abgenommenem Gehäusedeckel,
- Fig. 3: einen Querschnitt durch den ersten Gehäuseabschnitt in Fig. 2 entlang der Linie III-III,
- Fig. 4: eine Stirnansicht einer Mischwalze,
- Fig. 5: einen Querschnitt durch den zweiten Gehäuseabschnitt entlang der Linie V-V in Fig. 2.

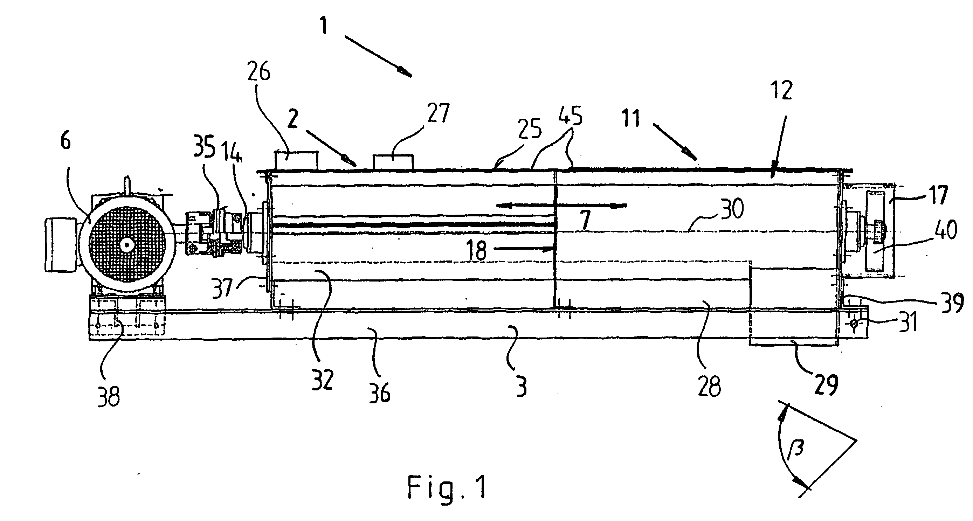

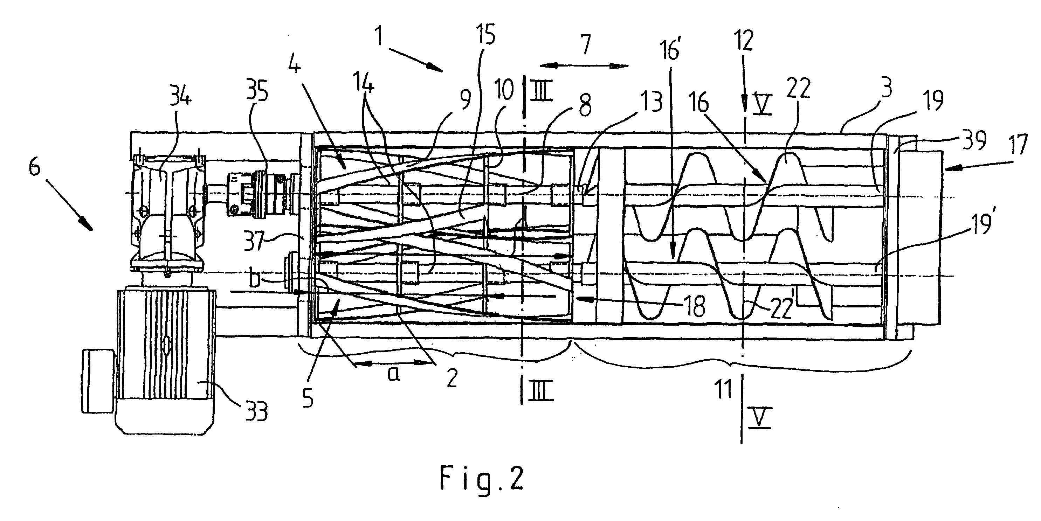

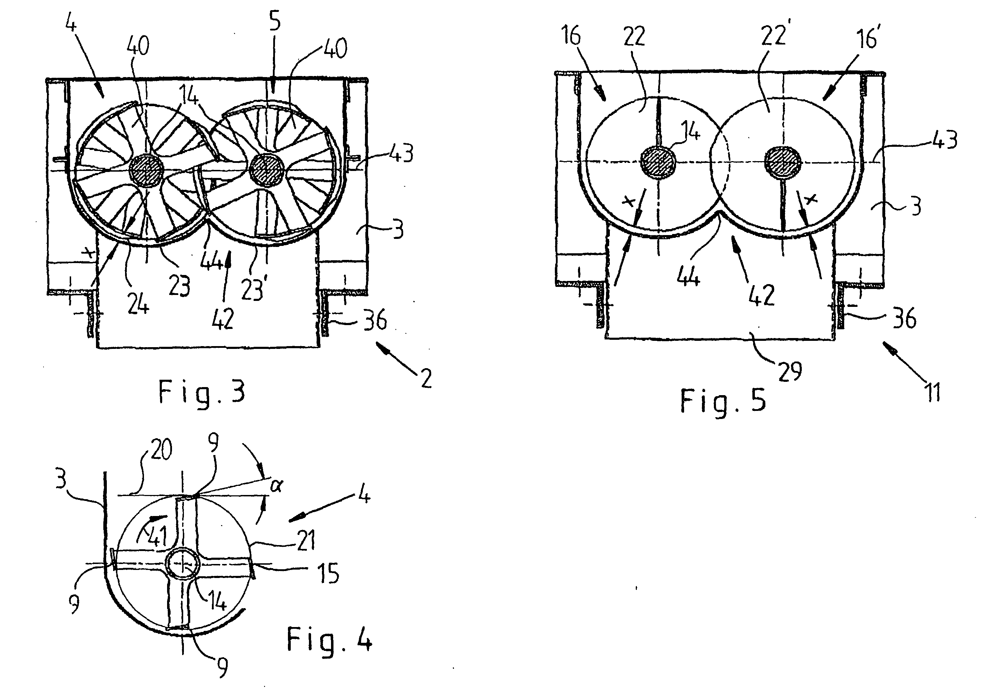

Fig. 1 zeigt eine Seitenansicht der Vorrichtung 1 zum Trocknen und Mischen von Schlickstoffen. Die Vorrichtung 1 besteht im wesentlichen aus einem Gehäuse 3 mit einem ersten Gehäuseabschnitt 2 und einem zweiten Gehäuseabschnitt 11, die zueinander offen sind. Das Gehäuse 3 ist auf zwei parallel mit Abstand zueinander angeordneten, im Querschnitt L-förmigen Trägerprofilen 36 gehalten, wie dies auch die Fig. 3 und 5 zeigen. Die Trägerprofile 36 ragen auf einer Seite der Vorrichtung 1 mit verlängerten Abschnitten über eine Stirnseite 37 des Gehäuses 3 hinaus und dienen mit den verlängerten Abschnitten als Konsole 38 zur Befestigung eines Antriebs 6, der einen Elektromotor 33 und ein stufenloses Getriebe 34 umfaßt (vgl. Fig. 2). An der am anderen Ende der Längserstreckung des ersten Gehäuseabschnittes 2 befindlichen Stirnseite ist der zweite Gehäuseabschnitt 3 angebaut, dessen Unterseite mit einem Boden 32 des ersten Gehäuseabschnitts 2 fluchtend verläuft.

Wie Fig. 2 in einer Draufsicht auf die Vorrichtung 1 mit abgenommenem Gehäusedeckel zeigt, sind in dem ersten Gehäuseabschnitt 2 zwei Mischwalzen 4, 5 zur drehzahlsynchronen, gegensinnigen Rotation angeordnet. Ein Stirnradgetriebe 17 an einer Stirnseite 39 des Gehäuses 3, die der Stirnseite 37 gegenüberliegt, verbindet die Wellen 14 der Mischwalzen. Die Mischwalzen 4, 5 sind im wesentlichen aus Schlagleisten 9 und 15 gebildet, die auf sternförmigen Trägern 10 befestigt sind. Die sternförmigen Träger 10 sind in bestimmten Abständen a auf den Wellen 14 der Mischwalzen 4, 5 angeordnet. Wie aus Fig. 3 ersichtlich ist, umfassen die Träger 10 mehrere Sprossen 40, die gegeneinander winkelversetzt sind, so daß die an den Enden der Sprossen 40 befestigten Schlagleisten 9, 15 wendelförmig in der Mantelfläche der Mischwalzen 4, 5 zu liegen kommen. Jeweils eine Mischleiste 15 jeder Mischwalze 4, 5 erstreckt sich im Gegensatz zu den übrigen Schlagleisten 9 nur über eine Teillänge b der Mischwalzen 4, 5. In dem Raumsegment des ersten Gehäuseabschnitts 2, in dem lediglich die langen Schlagleisten 9 bewegt sind, ist ein Übergabebereich gebildet, in dem weniger gemischt und mehr den Förderschnecken 16, 16' Mischgut zugeführt wird.

In dem zweiten Gehäuseabschnitt 11 ist ein Förderorgan 12 zur Längsförderung des Mischgutes hin zu einer Austragsöffnung 29 an der Unterseite 28 des zweiten Gehäuseabschnitts 11 angeordnet. Das Förderorgan 12 ist aus zwei gegensinnig rotierenden Förderschnecken 16, 16' gebildet. Die gekürzten Schlagleisten 15 erstrecken sich im Ausführungsbeispiel lediglich über 2/3 der Länge der ungekürzten Schlagleisten 9, wobei das gekürzte Ende auf der den Förderschnecken 16, 16' zugewandten Seite 18 der Mischwalzen 4, 5 liegt. Jeweils eine Förderschnecke 16, 16' ist mit einem verlängerten Abschnitt 13 der Wellen 14 der Mischwalzen 4, 5 drehfest verbunden. Wellenende 19, 19' der Förderschnecken 16, 16' durchragen die Stirnseite 39 des Gehäuses 3 und sind mit Zahnrädern 40 des Stirnradgetriebes 17 miteinander verbunden. Somit ist ein geschlossener Antriebsstrang ausgehend vom Elektromotor 33 über die Welle 14 der Mischwalze 4, der Förderschnecke 16, des Stirnradgetriebes 17, der Förderschnecke 16' bis hin zur Welle 14 der Mischwalze 5 gebildet. Ein drehzahlsynchroner, gegensinniger Lauf der Mischwalzen 4 und 5 und der Förderschnecken 16 und 16' ist dadurch bewirkt. Durch die Anwendung von zwei Förderschnecken, die im Mischgutstrom dem Mischer im ersten Gehäuseabschnitt nachgelegt sind, ist ein stopfungsfreier, rascher Austrag von Granulat aus der Vorrichtung ermöglicht. Das Granulat wird bei der Passage durch die Förderschnecken aufgelockert.

Die Schlagleisten 9, 15 weisen, wie dies beispielsweise Fig. 4 zeigt, einen etwa rechteckigen oder rautenförmigen Querschnitt auf. Dabei sind die Schlagleisten in Drehrichtung 41 der Mischwalze 4 betrachtet mit einem Anstellwin-Anstellwinkel α zur jeweiligen Tangente 20 versehen. Dies bewirkt, daß in Bewegungsrichtung der Schlagleisten 9, 15 gesehen abströmseitig ein sich vergrößernder Spalt zur Innenwandung des Gehäuses entsteht, so daß ein Verklemmen von harten Körpern zwischen Schlagleiste und Gehäuse vermieden wird.

Wie Fig. 3 in einem Querschnitt durch den ersten Gehäuseabschnitt entlang der Linie III-III zeigt, greifen die Schlagleisten 9, 15 der beiden Mischwalzen 4, 5 ineinander. Ebenso greifen auch die Wendeln 22, 22' der Förderschnekken 16, 16' ineinander, wie dies aus Fig. 5 ersichtlich ist. Ebenso zeigt Fig. 5, daß die Austragsöffnung 29 sich unterhalb von beiden Förderschnecken 16, 16' erstreckt und vorzugsweise die Gesamtbreite zwischen den Trägerprofilen 36 einnimmt.

Der Bodenbereich 42 des ersten und zweiten Gehäuseabschnitts 2, 11 ist jeweils als gleichmäßiger, die Mischwalzen 4, 5 und die Förderschnecken 16, 16' umgebender Bogen 23, 23' ausgeführt, wobei der jeweilige Bogen benachbarte Mischwalze 4, 5 und Förderschnecken 16, 16' mit konstantem Abstand x zur Mantelfläche 24 der Mischwalzen und Förderschnecken umgibt. Die beiden Bögen 23 und 23' verlaufen von einer Querachse 43 des Gehäuses 3, die unteren Bereiche der Mischwalzen und Förderschnecken umgebend, zu einem gemeinsamen Schnittpunkt 44, so daß jeder Bogen 23, 23' einen Winkel von etwa 135° erreicht. Ein Deckel 45 mit einer öffnung 26 zum Einbringen des Schlickstoffes und einer weiteren Öffnung 27 zum Einbringen eines Zuschlagstoffes insbesondere eines Adsorptionsmittels, wie dies Fig. 1 verdeutlicht. Orthogonal zur Längsrichtung 30 des Gehäuses 3 ist an den der Stirnseite 39 benachbarten Enden der Trägerprofile 36 eine Horizontalachse 31 vorgesehen. Die Horizontalachse 31 stellt eine Schwenkachse dar, um den die Vorrichtung 1 um den Betrag eines Winkels β von etwa ± 40° schwenkbar ist. Ein Bodenabschnitt 32 des ersten Gehäuseabschnittes 2 ist lösbar am Gehäuse 3 festgelegt. Der Bodenabschnitt 32 kann zu Wartungs- und Reparaturzwecken vom Gehäuse 3 entfernt werden.

Um Beschädigungen der Misch- und Förderwerkzeuge der Vorrichtung 1 beispielsweise bei einer zu hohen Beschickungsrate vorzubeugen, ist es zweckmäßig, zwischen dem Antrieb 6 und der angetriebenen Welle 14 der Mischwalze 4 (vgl. Fig. 2) eine Sicherheitsrutschkupplung 35 anzuordnen.

Anhand der Fig. 1 und 2 wird das Verfahren zum Trocknen von Schlickstoffen durch Vermengung mit Adsorptionsmitteln beschrieben. Durch die in Fig. 1 gezeigte Einfüllöffnung 26 wird Schlickstoff eingefüllt. Der Antrieb 6 treibt über die Sicherheitskupplung 35 die Welle 14 der Mischwalze 4 und somit auch die auf der verlängerten Welle 14 angeordnete Förderschnecke 16 (vgl. Fig. 2) an. Über den weiter oben bereits beschriebenen Antriebsstrang wird die Mischwalze 5 sowie die Förderschnecke 16' in gegensinnige Rotation versetzt und der eingefüllte Schlickstoff im ersten Gehäuseabschnitt 2 zunächst intensiv gerührt. Durch die zweite Einfüllöffnung 27 und ggf. auch durch die erste Einfüllöffnung 26 wird faser-, kugel- oder körnerförmiges Adsorptionsmittel beispielsweise als Zellstoff zugegeben und mit dem Schlickstoff vermischt.

Aufgrund der ineinandergreifenden Schlagleisten der Mischwalzen erfolgt eine rasche, gleichmäßige Ausbildung von Granulaten vorzugsweise im Korngrößenbereich von 0,1 mm bis 8 mm. Das Adsorptionsmittel ist dabei in der Lage, die Flüssigkeit enthaltenden, festen Stoffe zu binden und an der Oberfläche des Adsorptionsmittels diese Flüssigkeit über Kapillarkräfte an die Oberfläche der Granulate zu transportieren. Bei der Ausbildung der Granulate sind Impulse ausgehend von den Schlagleisten, Fallimpulse der sich in dem ersten Gehäuseabschnitt 2 bewegenden Aggregate und Prallimpulse zwischen den Aggregaten bzw. Granulatkernen bedeutsam. Das in dem ersten Gehäuseabschnitt gebildete Granulat gelangt durch die im zweiten Gehäuseabschnitt 11 offene Seite des ersten Gehäuseabschnitts in den Wirkungsbereich der Wendeln 22, 22' der Förderschnecken 16, 16'. Durch die Wirkung der Förderschnecken gelangt das Granulat zur Austragsöffnung 29. Es kann zweckmäßig sein, am Deckel des zweiten Gehäuseabschnittes weitere Einfüllöffnungen vorzusehen, um beispielsweise staub- oder pulverförmige Panierungsstoffe zugeben zu können. Die Panierungsstoffe verhindern insbesondere die Adhäsion der einzelnen Granulate. Nach dem Austrag der Granulate aus der Vorrichtung findet ein weiterer kapillarer Wassertransport aus dem Inneren eines jeden Granulatpartikels zu dessen Oberfläche statt. Eine zusätzliche Zufuhr von Wärme und somit ein zusätzlicher Energiebedarf zum Trocknen der Granulate erübrigt sich damit.

## Patentansprüche

1. Vorrichtung zum Trocknen von Schlickstoffen mit mindestens zwei in einem ersten Gehäuseabschnitt (2) eines Gehäuses (3) angeordneten Mischwalzen (4, 5), die mit einem Antrieb (6) zur drehzahlsynchronen und gegensinnigen Rotation versehen sind, mit in Längsrichtung (7) der Rotationsachsen (8) der Mischwalzen (4, 5) angeordneten Schlagleisten (9), die in vorgegebenen Abständen (a) am Umfang der Mischwalzen (4, 5) an Trägern (10) befestigt sind und mit einem zweiten Gehäuseabschnitt (11) mit einem darin befindlichen Förderorgan (12),
**dadurch gekennzeichnet, daß** mindestens eine der Schlagleisten (15) jeder Mischwalze (4, 5) sich über eine Teillänge (b) der Mischwalzen (4, 5) erstreckt, während die übrigen Schlagleisten (9) sich über die ganze Länge der Mischwalzen (4, 5) erstrecken und das Förderorgan (12) aus zumindest zwei, im wesentlichen parallel angeordneten und gegensinnig rotierenden Förderschnecken (16, 16') gebildet ist.

2. Vorrichtung nach Anspruch 1,
**dadurch gekennzeichnet, daß** die Teillänge (b) der Schlagleisten (15) etwa 2/3 der Gesamtlänge der Mischwalzen (4, 5) beträgt.

3. Vorrichtung nach einem der Ansprüche 1 oder 2,
**dadurch gekennzeichnet, daß** sich eine Schlagleiste (15) an jeder Mischwalze (4, 5) über eine Teillänge (b) der Mischwalzen (4, 5) erstreckt und auf der den Förderschnecken (16, 16') zugewandten Seite (18) der Mischwalzen (4, 5) gekürzt ist.

4. Vorrichtung nach einem der Ansprüche 1 bis 3,
**dadurch gekennzeichnet, daß** jeweils eine Förderschnecke (16, 16') mit einem verlängerten Abschnitt (13) der Welle (14) einer Mischwalze (4, 5) drehfest verbunden ist.

5. Vorrichtung nach einem der Ansprüche 1 bis 4,
**dadurch gekennzeichnet, daß** die Vorrichtung zwei Mischwalzen (4, 5) und zwei Förderschnecken (16, 16') umfaßt, wobei jeweils eine Mischwalze (4, 5) und eine Förderschnecke (16, 16') auf einer gemeinsamen Welle angeordnet sind.

6. Vorrichtung nach einem der Ansprüche 1 bis 5,
**dadurch gekennzeichnet, daß** ein Stirnradgetriebe (17) vorgesehen ist, das Wellenenden (19, 19') der Förderschnecken (16, 16') verbindet und ölbadgelagert ist.

7. Vorrichtung nach einem der Ansprüche 1 bis 6,
**dadurch gekennzeichnet, daß** die Schlagleisten (9, 15) einen etwa rechteckigen oder rautenförmigen Querschnitt haben, wobei vorzugsweise die Schlagleisten (9, 15) in Drehrichtung der Mischwalzen betrachtet einen positiven Anstellwinkel (α) zur jeweiligen Tangente (20) an den Umlaufkreis (21) der Mischwalzen (4, 5) aufweisen.

8. Vorrichtung nach einem der Ansprüche 1 bis 7,
**dadurch gekennzeichnet, daß** die Schlagleisten (9, 15) der Mischwalzen (4, 5) ineinandergreifen und die Wendeln (22, 22') der Förderschnecken (16, 16') ineinandergreifen.

9. Vorrichtung nach einem der Ansprüche 1 bis 8,
**dadurch gekennzeichnet, daß** jeweils vier sternförmige Träger (10) über die Länge (1) der Mischwalzen (4, 5) orthogonal auf den Wellen (14) der Mischwalzen (4, 5) angeordnet sind und die Schlagleisten (9, 15) wendelförmig an den Trägern (10) gehalten sind.

10. Vorrichtung nach einem der Ansprüche 1 bis 9,
**dadurch gekennzeichnet, daß** das Gehäuse (3) zwei sich entlang der Mischwalzen (4, 5) und der Förderschnekken (16, 16') erstreckenden Bögen (23, 23') mit konstantem Abstand (x) zur Mantelfläche (24) der Mischwalzen (4, 5) und der Förderschnecken (16, 16') aufweist, wobei sich jeder Bogen (23, 23') über mindestens 90°, vorzugsweise 135° erstreckt.

11. Vorrichtung nach einem der Ansprüche 1 bis 10,
**dadurch gekennzeichnet, daß** auf der Oberseite (25) des ersten Gehäuseabschnittes (2) zumindest eine öffnung (26) zum Einbringen des Schlickstoffes und eine Öffnung (27) zum Einbringen eines Zuschlagstoffes, vorzugsweise eines Absorptionsmittels, vorgesehen ist und an der Unterseite (28) des zweiten Gehäuseabschnittes (11) eine Austragsöffnung (29) angeordnet ist.

12. Vorrichtung nach einem der Ansprüche 1 bis 11,
**dadurch gekennzeichnet, daß** das Gehäuse (3) um eine orthogonal zur Längsrichtung (30) des Gehäuses (3) verlaufenden Horizontalachse (31) schwenkbar ist, wobei der Winkel (β) vorzugsweise etwa ± 40° beträgt.

13. Vorrichtung nach einem der Ansprüche 1 bis 12,
**dadurch gekennzeichnet, daß** der Boden (32) des ersten Gehäuseabschnitts (2) lösbar am Gehäuse (3) angebracht ist.

14. Vorrichtung nach einem der Ansprüche 1 bis 13,
**dadurch gekennzeichnet, daß** als Antrieb (6) mindestens ein Elektromotor (33) vorgesehen ist und der Antrieb (6) auf eine Welle (14) einer Mischwalze (4, 5) wirkt und vorzugsweise im Antriebsstrang zwischen dem Antrieb (6) und der Welle (14) eine Sicherheitskupplung (35) angeordnet ist.

15. Vorrichtung nach einem der Ansprüche 1 bis 14,
**dadurch gekennzeichnet, daß** die Drehrichtung des Antriebs (6) umkehrbar ist.

## Revendications

1. Dispositif pour sécher des boues, comprenant au moins deux mélangeurs à cylindres (4, 5) disposés dans une première partie (2) d'un carter (3), lesquels mélangeurs à cylindres sont dotés d'un entraînement (6) pour la rotation synchronisée avec la vitesse et s'effectuant en sens inverse, des battoirs (9) disposés dans le sens longitudinal (7) des axes de rotation (8) des mélangeurs à cylindres (4, 5), lesquels battoirs sont fixés sur des supports (10), sur la circonférence des mélangeurs à cylindres (4, 5), suivant des intervalles prédéterminés (a), et une seconde partie de carter (11) comprenant un organe de transport (12) se trouvant à l'intérieur,
**caractérisé en ce qu'**au moins l'un des battoirs (15) de chaque mélangeur à cylindres (4, 5) s'étend sur une longueur partielle (b) des mélangeurs à cylindres (4, 5), tandis que les autres battoirs (9) s'étendent sur toute la longueur des mélangeurs à cylindres (4, 5), et l'organe de transport (12) est formé par au moins deux vis sans fin (16, 16') disposées de façon pratiquement parallèle et tournant en sens inverse.

2. Dispositif selon la revendication 1, **caractérisé en ce que** la longueur partielle (b) des battoirs (15) est à peu près égale aux 2/3 de la longueur totale des mélangeurs à cylindres (4, 5).

3. Dispositif selon la revendication 1 ou 2, **caractérisé en ce qu'**un battoir (15), sur chaque mélangeur à cylindres (4, 5), s'étend sur une longueur partielle (b) des mélangeurs à cylindres (4, 5) et est raccourci sur le côté (18) des mélangeurs à cylindres (4, 5), tourné vers les vis sans fin (16, 16').

4. Dispositif selon l'une quelconque des revendications 1 à 3, **caractérisé en ce qu'**une vis sans fin (16, 16') est reliée à chaque fois, en étant fixe en rotation, à une partie prolongée (13) de l'arbre (14) d'un mélangeur à cylindres (4, 5).

5. Dispositif selon l'une quelconque des revendications 1 à 4, **caractérisé en ce que** le dispositif comprend deux mélangeurs à cylindres (4, 5) et deux vis sans fin (16, 16'), où un mélangeur à cylindres (4, 5) et une vis sans fin (16, 16') sont disposés, respectivement, sur un arbre commun.

6. Dispositif selon l'une quelconque des revendications 1 à 5, **caractérisé en ce qu'**il est prévu un réducteur à engrenage droit (17) qui relie des extrémités d'arbres (19, 19') des vis sans fin (16, 16') et est immergé dans un bain d'huile.

7. Dispositif selon l'une quelconque des revendications 1 à 6, **caractérisé en ce que** les battoirs (9, 15) ont une section à peu près rectangulaire ou en forme de losange, où les battoirs (9, 15) présentent, de préférence, en regardant dans le sens de rotation des mélangeurs à cylindres, un angle d'incidence positif (α) par rapport à la tangente respective (20) sur le cercle de rotation (21) des mélangeurs à cylindres (4, 5).

8. Dispositif selon l'une quelconque des revendications 1 à 7, **caractérisé en ce que** les battoirs (9, 15) des mélangeurs à cylindres (4, 5) s'engrènent et les spirales (22, 22') des vis sans fin (16, 16') s'engrènent.

9. Dispositif selon l'une quelconque des revendications 1 à 8, **caractérisé en ce que** quatre supports en étoile (10) sont disposés, à chaque fois, sur la longueur (1) des mélangeurs à cylindres (4, 5), perpendiculairement aux arbres (14) des mélangeurs à cylindres (4, 5), et les battoirs (9, 15) sont tenus, en forme d'hélice, sur les supports (10).

10. Dispositif selon l'une quelconque des revendications 1 à 9, **caractérisé en ce que** le carter (3) présente deux arcs (23, 23') s'étendant le long des mélangeurs à cylindres (4, 5) et des vis sans fin (16, 16') en ayant un intervalle constant (x) par rapport à la surface latérale (24) des mélangeurs à cylindres (4, 5) et des vis sans fin (16, 16'), où chaque arc (23, 23') s'étend sur au moins 90°, de préférence sur 135°.

11. Dispositif selon l'une quelconque des revendications 1 à 10, **caractérisé en ce qu'**il est prévu, sur la partie supérieure (25) de la première partie de boîtier (2), au moins une ouverture (26) pour introduire la boue et une ouverture (27) pour introduire un additif, de préférence un produit absorbant, et une ouverture d'évacuation (29) disposée sur la partie inférieure (28) de la seconde partie de carter (11).

12. Dispositif selon l'une quelconque des revendications 1 à 11, **caractérisé en ce que** le carter (3) peut pivoter autour d'un axe horizontal (31) s'étendant perpendiculairement au sens longitudinal (30) du carter (3), où l'angle (β) est égal, de préférence, à environ ± 40°.

13. Dispositif selon l'une quelconque des revendications 1 à 12, **caractérisé en ce que** le fond (32) de la première partie de carter (2) est monté de façon amovible sur le carter (3).

14. Dispositif selon l'une quelconque des revendications 1 à 13, **caractérisé en ce qu'**il est prévu au moins un moteur électrique (33) servant d'entraînement (6), et l'entraînement (6) agit sur un arbre (14) d'un mélangeur à cylindres (4, 5), et un accouplement de sécurité (35) est disposé de préférence dans la chaîne cinématique, entre l'entraînement (6) et l'arbre (14).

15. Dispositif selon l'une quelconque des revendications 1 à 14, **caractérisé en ce que** le sens de rotation de l'entraînement (6) peut être inversé.

## Claims

1. Device for drying sludge incorporating at least two mixing rollers (4, 5) disposed in a first housing section (2) of a housing (3), which are provided with a drive (6) to drive them in contrarotation at a synchronous speed, having agitator blades (9), disposed in the longitudinal direction (7) of the rotation axes (8) of the mixing rollers (4,5), which are attached to mounts (10) disposed at pre-defined distances (a) on the periphery of the mixing rollers (4, 5), and having a second housing section (11) with a conveyor unit (12) disposed therein,
**characterised in that** at least one of the agitator blades (15) of each mixing roller (4, 5) extends over a part length (b) of the mixing rollers (4, 5) whilst the other agitator blades (9) extend across the whole length of the mixing rollers (4, 5), and the conveyor unit (12) comprises at least two substantially parallel, contra-rotating screw conveyors (16, 16').

2. Device as claimed in claim 1,
**characterised in that** the part-length (b) of the agitator blades (15) is approximately 2/3 of the total length of the mixing rollers (4, 5).

3. Device as claimed in one of claims 1 or 2,
**characterised in that** an agitator blade (15) on every mixing roller (4, 5) extends across a part-length (b) of the mixing rollers (4, 5) and is shortened at the end (18) of the mixing rollers (4, 5) directed towards the screw conveyors (16, 16').

4. Device as claimed in one of claims 1 to 3,
**characterised in that** each respective screw conveyor (16, 16') is connected to an extended section (13) of the shaft (14) of a mixing roller (4, 5) so as to rotate therewith.

5. Device as claimed in one of claims 1 to 4,
**characterised in that** the device comprises two mixing rollers (4, 5) and two screw conveyors (16, 16'), and a mixing roller (4, 5) and a screw conveyor (16, 16') respectively are mounted on a common shaft.

6. Device as claimed in one of claims 1 to 5,
**characterised in that** a spur gear (17) is provided, which connects the shaft ends (19, 19') of the screw conveyors (16, 16') and is supported in an oil bath.

7. Device as claimed in one of claims 1 to 6,
**characterised in that** the agitator blades (9, 15) have a substantially rectangular or lozenge-shaped cross section and the agitator blades (9, 15) preferably have a positive angle of attack (α) relative to the respective tangent (20) on the circumference (21) of the mixing rollers (4, 5) as viewed in the rotation direction of the mixing rollers.

8. Device as claimed in one of claims 1 to 7,
**characterised in that** the agitator blades (9, 15) of the mixing rollers (4, 5) mesh with one another and the spirals (22, 22') of the screw conveyors (16, 16') mesh with one another.

9. Device as claimed in one of claims 1 to 8,
**characterised in that** four star-shaped mounts (10) are respectively disposed across the length (1) of the mixing rollers (4, 5) perpendicular to the shafts (14) of the mixing rollers (4, 5) and the agitator blades (9, 15) are retained on the mounts (10).

10. Device as claimed in one of claims 1 to 9,
**characterised in that** the housing (3) has two arcuate regions (23, 23') extending alongside the mixing rollers (4, 5) and the screw conveyors (16, 16') at a constant distance (x) from the external face (24) of the mixing rollers (4, 5) and the screw conveyors (16, 16'), each arcuate region (23, 23') extending round at least 90°, preferably 135°.

11. Device as claimed in one of claims 1 to 10,
**characterised in that** the top face (25) of the first housing section (2) has at least one orifice (26) for introducing the sludge and an orifice (27) for introducing an additive, preferably a drying agent, and the bottom face (28) of the second housing section (11) is provided with a discharge orifice (29).

12. Device as claimed in one of claims 1 to 11,
**characterised in that** the housing (3) can be pivoted about a horizontal axis (31) extending perpendicular to the longitudinal direction (30) of the housing (3), the angle (β) preferably being approximately ± 40°.

13. Device as claimed in one of claims 1 to 12,
**characterised in that** the base (32) of the first housing section (2) is mounted on the housing (3) so that it can be detached.

14. Device as claimed in one of claims 1 to 13,
**characterised in that** at least one electric motor (33) is provided as the drive (6) and the drive (6) acts of a shaft (14) of a mixing roller (4, 5), and a safety clutch (35) is preferably disposed in the drive train between the drive (6) and the shaft (14).

15. Device as claimed in one of claims 1 to 14,
**characterised in that** the rotation direction of the drive (6) is reversible.
